## Europäisches Patentamt
## European Patent Office
## Office européen des brevets

(11) Veröffentlichungsnummer: **0 137 517**
**A2**

# (12) EUROPÄISCHE PATENTANMELDUNG

(21) Anmeldenummer: **84112330.0**

(22) Anmeldetag: **12.10.84**

(51) Int. Cl.⁴: **G 01 B 11/00**

(30) Priorität: **13.10.83 DE 3337251**

(43) Veröffentlichungstag der Anmeldung:
**17.04.85  Patentblatt 85/16**

(84) Benannte Vertragsstaaten:
**IT**

(71) Anmelder: **Häusler, Gerd, Dr.**
**Alterlanger Strasse 33**
**D-8520 Erlangen(DE)**

(71) Anmelder: **Maul, Manfred**
**Haagstrasse 19**
**D-8520 Erlangen(DE)**

(72) Erfinder: **Häusler, Gerd, Dr.**
**Alterlanger Strasse 33**
**D-8520 Erlangen(DE)**

(72) Erfinder: **Maul, Manfred**
**Haagstrasse 19**
**D-8520 Erlangen(DE)**

(74) Vertreter: **Weber, Otto Ernst, Dipl.-Phys. et al,**
**Hofbrunnstrasse 47**
**D-8000 München 71(DE)**

(54) Verfahren und Vorrichtung zur mehrdimensionalen Vermessung eines Objektes.

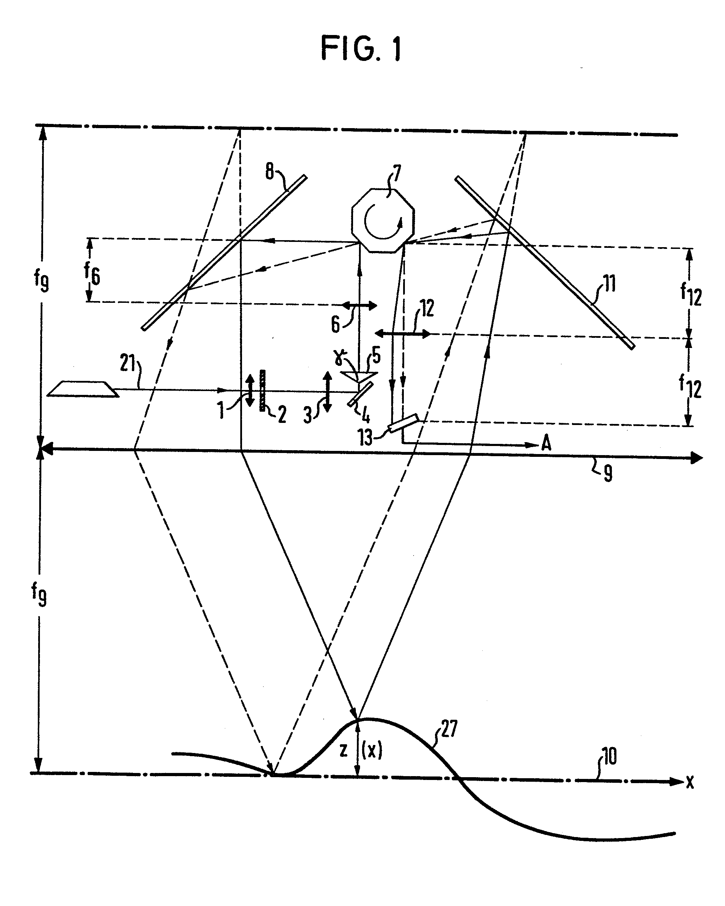

(57) Die Erfindung betrifft ein Verfahren und eine Vorrichtung zur mehrdimensionalen Vermessung eines Objektes. Speziell bezieht sich die Erfindung auf optische Verfahren mit serieller Erfassung der Vermessungspunkte. Bei derartigen Verfahren und Vorrichtungen ist ein gravierender Nachteil vor allen Dingen darin zu sehen, daß eine extrem hohe Anzahl von Empfängerelementen verwendet werden muß, die die bisher bekannte Kapazität elektronischer Apparaturen weit übersteigt. Als weiteres Problem ist bei großen dreidimensionalen Objekten keine hohe Auflösung insbesondere in der dritten Dimension, z.B. der Höhe, erreichbar. Diese Probleme werden bei der Erfindung dadurch gelöst, daß das Beleuchtungs- und Abbildungslichtbündel abgelenkt wird. Hierbei erfolgt diese Ablenkung so gekoppelt, daß bezüglich eines definierten Referenzobjektes die Verschiebung der Beleuchtungslichtbündel in einer Richtung, die üblicherweise einer Koordinatenrichtung entspricht, kompensiert werden kann. Hierdurch genügt bereits eine Empfängerlinie oder eine eindimensionale Empfängereinrichtung, um eine hohe Meßdynamik zu erreichen, da sämtliche Empfängerelemente zur Erfassung der Abweichungen des zu vermessenden Objektes in einer Koordinatenrichtung bzw. in der Richtung der Achse des Beleuchtungslichtbündels zur Verfügung stehen (Figur 1).

./...

FIG. 1

Die Erfindung betrifft ein Verfahren zur mehrdimensionalen Vermessung eines Objektes gemäß Oberbegriff des Anspruches 1 und eine Vorrichtung zur mehrdimensionalen Vermessung eines Objektes gemäß Oberbegriff des Anspruches 7.

Insbesondere betrifft die Erfindung ein Verfahren und eine Vorrichtung zur zweidimensionalen Vermessung eines Objektes, wobei durch eine Verschiebung des Objektes in der dritten Koordinatenrichtung oder durch die Vermessung des Objektes mittels des Verfahrens und der Vorrichtung auch in der dritten Koordinatenrichtung und parallel dazu, das Objekt dreidimensional vermessen werden kann.

Bekannte Verfahren dieser Art beruhen auf der Triangulationsmethode, bei der z.B. das Objekt optisch vermessen werden kann, indem ein schmales Lichtbündel oder eine Linie auf das Objekt projiziert wird und die Position des Beleuchtungslichtfleckes oder der Beleuchtungslinie auf dem zu vermessenden Objekt mit Hilfe einer Empfängereinrichtung bestimmt wird. Zur Bestimmung der räumlichen Lage des Beleuchtungslichtfleckes auf dem Objekt wird dabei die Beleuchtungsrichtung, also die Richtung der Achse des Beleuchtungslichtbündels, und der Ausgangspunkt des Beleuchtungslichtbündels mitberücksichtigt. Obwohl das Verfahren und die Vorrichtung nachstehend als optische Verfahren und Vorrichtung unter Bezugnahme auf eine weitgehende kohärente Strahlung eines Lichtbündels beschrieben wird, stellt dies keine Einschränkung des Verfahrens und der Vorrichtung dar. Vielmehr ist das Prinzip des Verfahrens und der Vorrichtung auch auf andere Strahlungsarten, z.B. eine Elektronenstrahlung, übertragbar.

Im Stande der Technik sind mehrere Verfahren bekannt, die im folgenden nach der zunehmenden Anzahl von Empfängerelementen bzw. Auflösungszellen der Empfängereinrichtung und gleichzeitig nach zunehmender Schnelligkeit der Vermessung geordnet sind.

Bei einem ersten Verfahren wird der Meßkopf der Form des zu vermessenden Objektes punktweise in den drei Dimensionen x,y und z nachgeführt. Die optische Empfängereinrichtung dient nur dazu, einen konstanten Abstand zwischen dem Meßkopf und der Fläche des zu vermessenden Objektes einzustellen (vergleiche dazu "Technische Anwendungen des Lasers", Herausgeber D. Rosenberger, Springer Verlag 1975, Seite 60). Bei diesem ersten Verfahren wird aus dem jeweiligen Ort des Meßkopfes die Form des Objektes abgeleitet, wobei im Prinzip nur ein einzelnes Empfängerelement benötigt wird.

Ebenfalls aus Rosenberger (vergleiche a.a.O., Seite 62) ist ein zweites Verfahren bekannt. Bei diesem zweiten Verfahren wird der Meßkopf in zwei Koordinaten x,y über das Objekt bewegt und die Höheninformation z aus der Lage des Bildpunktes auf der eindimensionalen Empfängereinrichtung bestimmt. Die Anzahl der benötigten Empfängerelemente bzw. Auflösungszellen der Empfängereinrichtung ist dabei gleich der Anzahl der zu unterscheidenden Höhenstufen. Ein derartiges, zweites Verfahren ist auch der "Produktinformation der Firma Selcom, Bruchfeld 100, 4150 Krefeld 12" zum Gerät "Optocator" zu entnehmen.

Bei einem weiteren bekannten Verfahren, dem dritten Verfahren, wird auf dem zu vermessenden Objekt mittels eines Spiegels, eines akustooptischen Ablenkers oder einer ähnlichen Einrichtung, ein Beleuchtungslichtbündel abgelenkt, so daß in einer Zeile, z.B. in x-Richtung, sequentiell ein Beleuchtungsfleck oder Lichtfleck auf dem Objekt erzeugt wird. Hierbei wird die Lage des Beleuchtungsfleckes auf dem Objekt

- 3 -

von einem in der durch die Beleuchtungsrichtung und die Abtasteinrichtung aufgespannte Ebene angebrachten eindimensionalen Empfänger bestimmt. Die Höheninformation, z.B. in der z-Richtung, ergibt sich aus der Vor- bzw. Nacheilung der Abbildung des Beleuchtungsfleckes auf dem Empfänger. Bei diesem dritten Verfahren ist die Anzahl der benötigten Empfängerelemente bzw. Auflösungszellen der Empfängereinrichtung gleich der Anzahl der auf dem Objekt in Zeilenrichtung aufzulösenden Punkte, wobei dazu im allgemeinen die gewünschte Anzahl der zu unterscheidenden Höhenstufen addiert werden muß. Die Abtastung bzw. Vermessung in der verbleibenden Richtung, z.B. der y-Richtung, kann dabei durch mechanische Verschiebung des Objektes oder des Meßkopfes erfolgen.

Bei einem vierten bekannten Verfahren wird mit einem schnell rotierenden Spiegelrad, einem akustooptischen Ablenker oder einer ähnlichen Einrichtung, z.B. in x-Richtung, eine Konturlinie erzeugt, die im allgemeinen senkrecht zur Beleuchtungs- und Abtastrichtung mit einem zweidimensionalen Empfänger betrachtet wird. Als zweidimensionaler Empfänger kann z.B. eine Fernsehkamera dienen. Diese vierte Art des Verfahrens ist als Lichtschnittverfahren bekannt. Hierbei ist die Anzahl der benötigten Empfängerelemente gleich dem Produkt aus den zu unterscheidenden Ortselementen in Abtastrichtung und der Anzahl der zu unterscheidenden Höhenstufen. Bei diesem vierten Verfahren kann z.B. die Vermessung in der weiteren dritten Dimension, z.B. der y-Richtung, durch mechanisches Verschieben des Objektes realisiert werden.

Speziell bei größeren Objekten mit Abmessungen von z.B. 2 m x 2m x 2 m, weisen die vorausgehend aufgeführten vier Verfahren Nachteile auf. Sofern man eine große Auflösung erzielen will, muß der das zu vermessende Objekt abtastende Beleuchtungsfleck klein sein. Bei einem kleinen Durchmesser d des Beleuchtungsfleckes benötigt man jedoch eine große Abbildungsapertur u, wobei hierfür die Beziehung gilt

$$d = \frac{\lambda}{\sin u} \; .$$

Dies schränkt jedoch den Höhenmeßbereich h, z.B. in z-Richtung, ein, denn die Schärfentiefe $\Delta z$ der Abbildung ist

$$\Delta z = \frac{\lambda}{\sin^2 u} \; ,$$

wobei gelten muß $h \lesssim \Delta z$. Fordert man z.B. einen Durchmesser des Beleuchtungsfleckes von d = o,1 mm, so liegt der Höhenmeßbereich h bei ungefähr 20 mm. Diese Einschränkungen und Nachteile gelten sowohl im Beleuchtungsbereich wie auch im Abbildungsbereich, wobei im Abbildungsbereich die räumliche Lage des Beleuchtungsfleckes auf dem zu vermessenden Objekt bestimmt wird. Durch eine entsprechende Verarbeitung der Abbildung , z.B. durch eine Schwerpunktsbestimmung des Beleuchtungsfleckes auf der Empfängereinrichtung, läßt sich der Höhenmeßbereich erweitern. Allerdings sind hier durch den erforderlichen Aufwand Grenzen gesetzt. Aus diesem Grunde sind das bekannte zweite, dritte und vierte Verfahren auf Objekte mit geringen Höhenschwankungen beschränkt. Dies gilt vor allen Dingen dann, wenn man eine hohe Auflösung in Abtastrichtung erreichen will.

Der weitere und ganz gravierende Nachteil besteht vor
allen Dingen beim dritten und vierten Verfahren darin, daß
bei einer Vermessung des Objektes mit hoher räumlicher
Auflösung, die Anzahl der Empfängerelemente bzw. Auflösungszellen in der Empfängereinrichtung außerordentlich groß sein muß.
Bei den bekannten ersten und zweiten Verfahren wäre zwar die
Anzahl der benötigten Empfängerelemente bzw. Auflösungszellen
geringer. Diese Verfahren eins und zwei sind jedoch wegen der zur
Abtastung erforderlichen mechanischen Bewegung in mehreren
Richtungen wesentlich langsamer.

Dieses Problem, eine hohe räumliche Auflösung über einen
großen Meßbereich zu erreichen oder anders ausgedrückt, bei
einer vorgegebenen Anzahl von Empfängerelementen und hoher
Auflösung einen großen Meßbereich erfassen zu können, wird
nachstehend kurz mit Meßdynamik umrissen. Der Stand der Technik gestattet es etwa eine im wesentlichen eindimensional angeordnete Empfängereinrichtung mit ca. 4000 Empfängerelementen
auszulegen. Bei der Anwendung der vorausgehend beschriebenen
Verfahren werden jedoch diese Elemente nicht optimal genutzt,
da ein wesentlicher Teil dieser Empfängerelemente zur Bestimmung der Koordinaten des abzutastenden Objektes in der
Abtast- bzw. Verschieberichtung der Beleuchtungslichtbündel
benötigt wird. Hierdurch steht nur noch ein geringer Teil der
Empfängerelemente für die Auflösung in der Höhenrichtung des
Objektes, die im allgemeinen senkrecht zur Abtastrichtung des
Objektes definiert werden kann, zur Verfügung.

Ausgehend von diesen Nachteilen liegt der Erfindung die **Aufgabe**
zugrunde, ein Verfahren und eine Vorrichtung zur mehrdimensionalen Vermessung von insbesondere großen Objekten auf der Basis
der Triangulationsmethode so auszulegen, daß eine zeitlich relativ schnelle Vermessung des Objektes bei großer
räumlicher Auflösung mit einer relativ geringen Anzahl
von Empfängerelementen erreichbar ist.

Diese Aufgabe wird bei einem gattungsgemäßen Verfahren erfindungsgemäß durch die Merkmale des kennzeichnenden Teils
des Anspruches 1 und bei einer gattungsgemäßen Vorrichtung
erfindungsgemäß durch die Merkmale des kennzeichnenden Teils
des Anspruches 7 gelöst.

Der essentielle Erfindungsgedanke kann darin gesehen werden,
daß bei einer zweidimensionalen Vermessung eines Objektes
z.B. längs der x-Achse, vereinfacht ausgedrückt, die Verschiebung der auf dem zu vermessenden Objekt entstehenden
Beleuchtungsflecke nicht oder zumindest nicht ausschließlich durch die Empfängerelemente erfaßt wird, sondern diese
Verschiebung längs der x-Achse kompensiert wird, so daß
die gesamte Anzahl der zur Verfügung stehenden Empfängerelemente zur Erfassung der Veränderung des Objektes längs
dieser abgetasteten x-Richtung ausgenutzt werden kann. Dies
bringt den wesentlichen Vorteil, daß bei gleicher Anzahl
der im Stand der Technik und in der Erfindung zur Verfügung
stehenden Empfängerelemente eine wesentlich bessere Auflösung der Veränderung des Objektes, z.B. der Höhenerfassung des Objektes in z-Richtung, mit gleicher lateraler
Auflösung durchgeführt werden kann. Die Kompensation der
Verschiebung in der Abtastrichtung, die als Spur der Durchstoßpunkte einer Folge von Beleuchtungslichtbündeln mit der
Oberfläche des zu vermessenden Objektes definiert sein soll,
wird dadurch erreicht, daß das zur Abbildung verwendete Abbildungslichtbündel zum entsprechenden Beleuchtungslichtbündel so gekoppelt abgelenkt wird, daß bei einer zweidimensionalen Vermessung, z.B. z(x), eine Verschiebung
des Beleuchtungsfleckes in der

Abtastrichtung x kompensiert werden kann. Die x-Koordinate selbst kann dabei im einfachsten Fall durch die Beleuchtungsrichtung des Beleuchtungslichtbündels ermittelt werden.

Um diese Kompensation unter einem nach Kosten-Nutzen-Aspekten vernünftigen Aufwand zu erreichen, geht die Erfindung den grundsätzlich neuen Weg, ein "Referenzobjekt" zu definieren, dessen Geometrie von der Geometrie des Beleuchtungs- und Abbildungsbereiches abhängt, wobei gegebenenfalls auch der Empfängerbereich mitbeeinflussend sein kann. Dieser grundsätzlichen Idee kommt eigenständiger Erfindungscharakter zu. Mit anderen Worten wird die Kompensation der Verschiebung der Beleuchtungslichtbündel in einer Richtung nicht bezüglich des üblichen xyz-Koordinatensystem durchgeführt, sondern bezüglich eines Referenzobjektes. Die dreidimensionale Kontur dieses Referenzobjektes kann dabei relativ einfach in der Auswerteinrichtung gespeichert werden. Der Vorteil, der sich durch diese Kompensation bezüglich des Referenzobjektes ergibt, liegt insbesondere in der relativ einfachen Geometrie des Beleuchtungs- und Abbildungsstrahlenganges, und speziell in der auf diese Weise erreichten verblüffend einfachen gekoppelten Ablenkung des Abbildungslichtbündels.

Mit anderen Worten ist das Verfahren und die Vorrichtung gemäß der Erfindung so ausgelegt, daß auf dem fiktiven Referenzobjekt liegende Beleuchtungsflecke, die durch das eingesetzte Beleuchtungslichtbündel erzeugt werden, in die Empfangseinrichtung mittels des Abbildungslichtbündels so projiziert werden, daß alle auf dem fiktiven Referenzobjekt liegende Beleuchtungsflecke in einem bestimmten Referenzwinkel zur optischen Achse der Abbildungseinrichtung nach der Ablenkung des Abbildungslichtbündels projiziert werden. Dieser Referenzwinkel

- 8 -

ist konstant und kann sowohl Null als auch von Null verschieden sein. Alle auf dem tatsächlich zu vermessenden Objekt liegenden Beleuchtungsflecke werden dagegen in einem Winkel zur optischen Achse in der Empfängereinrichtung abgebildet, der variieren kann. Aus der Winkeldifferenz des jeweiligen Winkels mit dem Referenzwinkel kann dann in der Auswerteinrichtung die Abweichung des zu vermessenden Objektes in der entsprechenden Beleuchtungsrichtung des Beleuchtungslichtbündels gegenüber dem Referenzobjekt ermittelt werden. Aus dieser Abweichung und der Beleuchtungsrichtung bzw. dem Ablenkungswinkel des Beleuchtungslichtbündels und/oder des Abbildungslichtbündels, kann dann die räumliche Lage des entsprechenden Beleuchtungsfleckes auf dem zu vermessenden Objekt im xyz-Koordinaten-System berechnet werden. Unter Beleuchtungsrichtung wird hierbei die Richtung der Achse des jeweiligen Beleuchtungslichtbündels verstanden. Insbesondere bei zweidimensionaler Vermessung, z.B. z(x), kommt die Erfindung mit einer Empfangslinie bzw. mit in einer Linie angeordneten Empfängerelementen aus. Diese Empfangslinie kann jedoch auch für eine dreidimensionale Vermessung eines Objektes, also z(x,y), gelten, sofern die verwendeten Ablenkungseinrichtungen nicht nur in einer, sondern in zwei Koordinatenrichtungen, z.B. x,y, kompensieren, was bedeutet, daß diese Ablenkungseinrichtungen zweidimensional gekoppelt ablenken.

Die Empfangslinie ist so angeordnet, daß sie die optische Achse der Abbildungseinrichtung schneidet, wobei des weiteren erfüllt ist, daß die Empfangslinie in einer Ebene liegt, die durch die Achsen der Abbildungslichtbündel im Empfangsbereich gebildet wird. Genauer gesagt wird diese Ebene nach der zweiten Ablenkungseinrichtung von den Achsen der Abbildungslichtbündel der Beleuchtungsflecken von unterschiedlichen Objekten bei gleichen oder verschiedenen Beleuchtungslichtbündeln aufgespannt. Vorteilhafterweise ist diese Empfangslinie abbildungstechnisch gesehen, eine geradlinige Strecke, die in einer Neigung zur optischen Achse angeordnet ist und
diese in einem Punkt schneidet, so daß die "Scheimpflugbedingung"
zur Erlangung einer scharfen Abbildung aller entlang des jeweiligen Beleuchtungslichtbündels auftretenden Beleuchtungsflecke
auf die Empfangslinie durch die Abbildungseinrichtung erfüllt ist.
Mit anderen Worten wird eine scharfe Abbildung des das Objekt
abtastenden Beleuchtungsfleckes unabhängig von der Form des
Objektes erreicht. Die Erfüllung der Scheimpflugbedingung ist
wirkungsmäßig mit einer Maßnahme zur Schärfentiefenerweiterung
vergleichbar. Maßgebend war hierbei, diese Möglichkeit der
scharfen Abbildung überhaupt erst zu erkennen und die Geometrie
der Abbildungseinrichtung dementsprechend auszulegen.
Eine vorteilhafte Lösung und Weiterbildung der Erfindung besteht darin, daß das Beleuchtungslichtbündel, das im allgemeinsten Sinn als Intensitätsverteilung einer Strahlung
angesehen werden kann, und das Abbildungslichtbündel über
zwei synchron ablenkende Ablenkungseinrichtungen geführt
werden. Das Beleuchtungslichtbündel dient dabei dazu, auf
dem zu vermessenden Objekt einen Beleuchtungsfleck oder eine
definierte Intensitätsverteilung zu erzeugen, wo hingegen
das Abbildungslichtbündel die Folge der Beleuchtungsflecke
auf dem zu vermessenden Objekt in eine Empfängereinrichtung,
die als photoempfindlicher Empfänger ausgelegt sein kann,
abbildet. Die synchrone Ablenkung bzw. die gekoppelte Ablenkung erfolgt derart, daß die durch die Abtastung entstehende seitliche Verschiebung des abtastenden Beleuchtungslichtbündels relativ zur Empfängereinrichtung kompensiert wird.
Von einem bestimmten Punkt in der Bildebene des Abbildungslichtbündels aus betrachtet, schneiden sich dann die optischen Achsen der Beleuchtungseinrichtung und der Abbildungseinrichtung für beliebige Ablenkwinkel in einer ebenen Raumkurve, wobei dies für spezielle Gestaltungen der Vorrichtung
gilt. Um einen allgemein gültigen Terminus hierfür zu erreichen,
wird die vorstehend benannte Raumkurve nachfolgend als "Referenzobjekt" bezeichnet. Das Referenzobjekt, das auch als Null-Linie
betrachtet werden kann, nimmt z.B. bei telezentrischen Lichtbündeln im Zweidimensionalen die Form einer Geraden an. Wesentlich für dieses Referenzobjekt ist, daß alle Beleuchtungsflecke bzw. Oberflächenpunkte auf dem zu vermessenden Objekt,
die gleichzeitig auch auf dem Referenzobjekt liegen,
auf den gleichen Punkt der Bildebene in der Empfängereinrichtung abgebildet werden. Für Beleuchtungsflecke, die
nicht auf dem Referenzobjekt liegen, verschiebt sich die
Abbildung in der Empfängereinrichtung auf einer Geraden.
Entlang dieser Geraden wird eine Empfängerlinie bzw. eine
Empfängerzeile oder eine vorgebbare Anzahl von Empfängerelementen angeordnet. Aus der Abweichung der Abbildung
eines beliebigen Beleuchtungsfleckes auf dem zu vermessenden Objekt gegenüber dem Referenzpunkt für das Referenzobjekt in der Empfängerlinie, kann dann die Abweichung
des zu vermessenden Objektes gegenüber dem Referenzobjekt
berechnet werden. Die Bestimmung der räumlichen Lage
eines auf dem Objekt vermessenen Punktes erfolgt dabei
unter Einbeziehung der jeweiligen Winkelstellung mindestens
der ersten Ablenkungseinrichtung. Abhängig von der Ausführungsart der gesamten Ablenkungseinrichtung muß der Ablenkungswinkel der zweiten Ablenkungseinrichtung, die zur Ablenkung
des Abbildungslichtbündels dient, mit einbezogen werden oder
kann unberücksichtigt bleiben. Zum Beispiel ist bei einer
winkelstarren Kopplung der ersten und zweiten Ablenkungseinrichtung, die Einbeziehung des Ablenkungswinkel der zweiten Ablenkungseinrichtung zur Bestimmung der Koordinaten des
auf dem Objekt vermessenen Punktes nicht erforderlich. Die
Form des Referenzobjektes wird durch die Geometrie der Be-
leuchtungs- und Abbildungseinrichtungen bestimmt. Vorteilhafterweise kann hierbei auch der Weg gegangen werden, dem Referenzobjekt zumindestens über Teilbereiche einen dem zu vermessenden Objekt ähnlichen Konturverlauf zu geben. Maßgebend ist
hierbei jedoch, daß die Auslegung der optischen Einrichtungen zur Strahlungsführung, insbesondere im Hinblick auf
die gekoppelte Ablenkung, relativ einfach und kostengünstig
realisierbar ist.

Die Erfindung hat den wesentlichen Vorteil, daß für die
Vermessung des zweidimensionalen Höhenprofils, also z.B.
$z(x)$, nur eine eindimensionale Empfängereinrichtung in Form
einer Linie von Empfängerelementen, die bezüglich des auf
das Objekt projizierten Beleuchtungsfleckes positionsempfindlich ausgelegt sind, benötigt werden. Aufgrund der erfindungsgemäß vorhandenen Kompensation in einer Verschiebungsrichtung,
ist die Anzahl der erforderlichen Empfängerelemente gleich
der Anzahl der aufzulösenden Höhenstufen in bezug auf das Referenzobjekt.
Zur Kompensation der Verschiebung der Beleuchtungslichtbündel in einer Richtung eignet sich vorteilhafterweise
eine winkelstarre Kopplung zwischen der ersten und der
zweiten Ablenkungseinrichtung. Diese winkelstarre Kopplung
kann gerade bei optischen Systemen in einfachster Weise
dadurch realisiert werden, daß die erste und zweite Ablenkungseinrichtung in einer gemeinsamen Ablenkungseinrichtung
integriert sind. Dies ist besonders deshalb zweckmäßig, da
die Steuerungs- und Antriebsmechanismen sowie die entsprechenden Sensoren zur Ermittlung der Ablenkung der Lichtbündel im Prinzip nur einmal zur Verfügung stehen müssen.
Für diese Art einer gemeinsamen Ablenkungseinrichtung eignen
sich besonders Drehspiegel, mit denen die Ablenkung der Lichtbündel sowohl auf einer Seite als auch bei doppelseitigen Spiegeln auf
gegenüberliegenden Seiten durchgeführt werden kann. Ebenso sind
polygonale Spiegelräder dafür geeignet, wobei die Ablenkung
des Beleuchtungslichtbündels und des Abbildungslichtbündels
an verschiedenen Spiegelradflächen erfolgt. Je nach Einsatzbereich können auch andere Ablenkungseinrichtungen, wie
akustooptische oder elektrooptische Ablenker, elektronisch
gesteuerte Kipp- oder Drehspiegel, starr verbundene Spiegel
oder ein einziger großer Spiegel eingesetzt werden. Die Kompensation des Abtast- bzw. Verschiebungsweges des Beleuchtungslichtbündels kann bezüglich einer Koordinate, z.B. in x-Richtung, erfolgen, wobei zur vollständigen Vermessung des Objektes, also z.B. des Höhenprofils z(x,y), eine mechanische Verschiebung des Objektes in der verbleibenden Koordinatenrichtung, z.B. in y-Richtung, erfolgen kann. Die Erfindung ist jedoch nicht auf die zweidimensionale Vermessung von Objekten beschränkt, wobei hier die Kompensation in einer Richtung stattfindet, sondern es kann auch eine direkte dreidimensionale Vermessung durchgeführt werden. Im letzteren Fall ist es erforderlich, geeignete zweidimensionale Ablenkungseinrichtungen, die z.B. vorzugsweise als um zwei Achsen drehbare Spiegel ausgelegt sein können, verwendet werden. Als Alternative hierzu sind auch zwei eindimensionale Ablenkungseinrichtungen, die hintereinander angeordnet sind, verwendbar.

Da das erfindungsgemäße Verfahren als seriell arbeitendes Verfahren ausgelegt ist, worunter also die sukzessive und nacheinander erfolgende Abtastung bzw. Vermessung des Objekts mit endlich vielen Beleuchtungsflecken verstanden wird, so daß sich die Form des Objektes an endlich vielen Stellen ergibt, kommt das Verfahren mit einer Linie von Empfängerelementen aus. Hierdurch wird die Meßdynamik zur Bestimmung des Koordinatenunterschiedes gegenüber dem Referenzobjekt, z.B. in Höhenrichtung z, bereits verbessert. Verfahren und Vorrichtung können deshalb auch zur Vermessung von Objekten eingesetzt werden, die z.B. auch in der dritten Dimension, der z-Richtung, eine starke Strukturierung aufweisen. Die räumliche Auflösung wird daher bei der Erfindung trotz eines großen Meßbereiches in allen drei Dimensionen im Vergleich zum Stand der Technik verbessert.

Um die Meßdynamik im Abbildungsbereich oder Empfangsbereich noch zu verbessern, wird die Erfindung durch Maßnahmen zur Schärfentiefenerweiterung in vorteilhafter Weise
weitergebildet. Zweckmäßigerweise wird hierzu die Empfangslinie bzw. die Linie der Empfängerelemente unter einem Winkel
zur optischen Achse der nach der Ablenkung des Abbildungslichtbündels vorgesehenen Abbildungseinrichtung angeordnet,
wobei die Empfangslinie die optische Achse in einem Punkt
schneidet, in den der Schnittpunkt des jeweiligen
Beleuchtungsbündels mit der optischen
Achse der Abbildungseinrichtung vor der Ablenkung der Abbildungslichtbündel in den Empfangsbereich abgebildet wird.
Der Neigungswinkel $\varphi'$ gegenüber der optischen Achse der
Abbildungseinrichtung nach der Ablenkung wird dabei so bestimmt, daß er eine Funktion des Winkels $\varphi$ ist, unter den
sich das jeweilige Beleuchtungslichtbündel und die optische
Achse der Abbildungseinrichtung im Objektbereich vor der Ablenkung schneiden. Unter Berücksichtigung des Abbildungsmaßstabes ß der Abbildungseinrichtung
wird der Neigungswinkel $\varphi'$ der Empfängerlinie so bestimmt,
daß ß·tan $\varphi'$ = tan $\varphi$ ist.

Die Schärfentiefenerweiterung auf der Empfängerlinie kann
vorzugsweise auch dadurch erreicht werden, daß die Linie
der Empfängerlemente gemäß der Scheimpflugbedingung gegen
die optische Achse der Abbildungseinrichtung nach der Ablenkung
des Abbildungslichtbündels geneigt ist. Zweckmäßigerweise
kann auch ergänzend oder alternativ dazu ein Axicon oder eine
Linse mit Ringpupille in den Strahlengang des Abbildungslichtbündels zwischengeschaltet werden. Eine weitere Verbesserungsmöglichkeit bei der Abbildung besteht darin, daß mittels eines Verfahrens der Bildverarbeitung zusätzlich
der Schwerpunkt des Beleuchtungsfleckes bzw. der Intensitätsverteilung auf dem Objekt bzw. in der Empfangslinie ermittelt
wird. Generell gesehen kann die Schärfentiefenerweiterung
im Abbildungsbereich dadurch verbessert und erreicht werden, daß
das Abbildungslichtbündel verfahrensmäßig so beeinflußt
wird, daß ein ausgeprägtes Intensitätsmaximum seiner Lichtverteilung längs der Lichtbündelachse , insbesondere längs eines
großen Bereichs der Lichtbündelachse im Objektbereich, erreicht wird.
Die Ablenkung des Beleuchtungslichtbündels und des Abbildungslichtbündels kann vorteilhafterweise phasenstarr gekoppelt um jeweils den gleichen Winkel erfolgen. Speziell
bei telezentrischen oder zentrischen Beleuchtungs- und Abbildungslichtbündeln vereinfacht dies das Ablenkungssystem.

Allgemeiner betrachtet wird eine winkelstarre Kopplung
der Ablenkung des Beleuchtungslichtbündels und des zugeordneten Abbildungslichtbündels so durchgeführt, daß der
Winkel $\alpha$ zwischen den Achsen zweier beliebiger Beleuchtungslichtbündel und der Winkel $\alpha'$ zwischen den jeweiligen zugeordneten optischen Achsen der Abbildungseinrichtung im Objektbereich vor der Ablenkung der Abbildungslichtbündel, gleich
ist.

Da die verfahrens- oder vorrichtungsmäßig
erreichbare Meßdynamik durch die Schärfentiefenerweiterung
im Beleuchtungsbereich mitbeeinflußt wird, werden auch in
diesem Bereich vorteilhafterweise Maßnahmen ergriffen,
die dies ermöglichen. Die Projizierung des Beleuchtungsfleckes auf das zu vermessende Objekt erfolgt dementsprechend
durch eine die Schärfentiefe erweiternde Methode. Eine Maßnahme
dieser Art ist aus dem Deutschen Patent DE-PS 23 01 800
bekannt. Vorzugsweise wird in den Strahlengang des

Beleuchtungslichtbündels ein Axicon oder eine Linse mit
Ringpupille zwischengeschaltet. Diese Maßnahmen und Vorrichtungen erlauben es, daß sich das dadurch entstehende
Interferenzmuster längs der optischen Achse über eine Distanz
von mehreren Metern nur unwesentlich ändert, so daß ein "lichtstiftartiges" Beleuchtungslichtbündel vorhanden ist. Hierbei
kann der Durchmesser des in der optischen Achse liegenden
Intensitätsmaximumsetwa 100 µm oder weniger betragen. Das
Intensitätsmaximum wird insbesondere längs eines großen Bereichs der Lichtbündelachse im Objektbereich vorgesehen. Als
Lichtquelle zur Erzeugung eines derartigen Strahlenganges
eignet sich besonders ein Laser. Ebenso können andere Strahlungsquellen zur Erzeugung kohärenter Wellen benutzt werden.

Eine andere Maßnahme zur Schärfentiefenerweiterung besteht
darin, den scharfen Objektpunkt bzw. ein fokussiertes Lichtbündel schnell entlang der optischen Achse der Beleuchtungseinrichtung zu bewegen, so daß im Zeitmittel ebenfalls ein
"lichtstiftartiges" Lichtbündel entsteht. Je nach Anwendungsfall kann auch auf dem Objekt eine Lichtverteilung erzeugt
werden, die sich bei Defokussierung selbst reproduziert. Hierzu
werden vorzugsweise Gitter oder Fresnel-Zonenplatten verwendet.

Vorteilhafterweise arbeitet die Erfindung mit telezentrischen
Beleuchtungs- und Abbildungslichtbündeln, d.h. daß z.B. alle
Beleuchtungslichtbündel im Objektraum parallel zueinander
verlaufen. Gleiches gilt für alle zugehörigen optischen Achsen
der Abbildungseinrichtung. Die zugehörigen optischen Achsen
der Abbildungseinrichtung resultieren aus der Ablenkung des
Abbildungsstrahlenganges bzw. der entsprechenden Lichtbündel
und beispielsweise aus der Faltung an vorhandenen Spiegeln.
Hierdurch schneiden sich alle Beleuchtungslichtbündel und ihre
zugehörigen optischen Achsen der Abbildungseinrichtung unter
dem gleichen festen Winkel. Dies ergibt einen wesentlichen Vorteil hinsichtlich der vereinfachten Ablenkung, aber insbesondere
auch eine hohe ortsunabhängige Genauigkeit bei der Vermessung
des dreidimensionalen Objektes.

Aufgrund der Konpensation ist es möglich, die
Linie der Empfängerelemente geradlinig anzuordnen,
so daß von einer eindimensionalen Empfängerzeile
gesprochen werden kann. Der Terminus
"eindimensional" berücksichtigt dabei nicht die dreidimensionale Abmessung des einzelnen Empfängerelementes, sondern faßt diese als punktartig aneinander geordnete
Empfängerelemente auf. Prinzipiell gesehen könnte die Linie
der Empfängerelemente auch einen zweidimensionalen, z.B.
Bogensegment-Verlauf annehmen. Die geradlinige Anordnung
bringt jedoch eine erhebliche konstruktive Vereinfachung,
wobei dies durch vorgesehene Maßnahmen zur Schärfentiefenerweiterung nicht zu Lasten der Meßdynamik geht.

Zweckmäßigerweise werden die erste und zweite Ablenkungseinrichtung für die entsprechenden Lichtbündel als ein Ablenkspiegel ausgelegt, wobei die gemeinsame Drehachse
geeigneterweise in der Längsmittelachse, z.B. bei Kippspiegel,
zu liegen kommt. Bei einem polygonalen Spiegelrad liegt die
gemeinsame Drehachse in der Rotationsachse des Spiegelrades.

Das zur Kompensation der Verschiebung der Lichtbündel
in einer Richtung eingeführte Referenzobjekt kann ein beliebiger sphärischer Körper sein, wobei die Form einer Geraden,
einer Ebene, einer Kreis- oder Zylindermantelfläche oder
eines Kugelflächensegmentes, die im Hinblick auf die Auslegung der optischen Vorrichtung geeignetsten Formen sind.

Betrachtet man die zweidimensionale Vermessung eines Objektes
mittels der Erfindung, so sind die Vorteile erkennbar, daß
zur Ermittlung des Höhenprofils, z.B. z-Richtung, nur eine
eindimensionale Empfängerzeile benötigt wird. Die Anzahl der Empfängerelemente muß nicht größer sein, als die im entsprechenden Fall gewünschte Anzahl von auflösbaren Höhenstufen und hängt nicht von der Anzahl der Meßpunkte in der Abtastrichtung bzw. in der Verschiebungsrichtung des Beleuchtungslichtbündels auf dem Objekt ab. Neben der daraus resultierenden technischen Vereinfachung ist auch bei vergleichbarem Zeitaufwand mit Verfahren des Standes der Technik, die mögliche Anzahl der Meßpunkte bei der Erfindung größer als im Stand der Technik. Durch die Anwendung der erwähnten Methoden zur Schärfentiefenerweiterung im Beleuchtungs- und/oder im Abbildungsbereich, ist die Vermessung von Höhenprofilen mit hoher räumlicher Auflösung unabhängig von der Höhe des Objektes möglich. Die erzielbare Genauigkeit ist nur durch die Qualität der abbildenden optischen Elemente und die Anzahl der Empfängerelemente im Detektor begrenzt. Die dreidimensionale Vermessung von Objekten mit serieller Abtastung erfolgt daher bei der Erfindung wesentlich schneller bei geringerem Aufwand und mit höherer Meßdynamik als bei vergleichbaren Verfahren.

Die Erfindung wird nachstehend anhand bevorzugter Ausführungsbeispiele noch näher erläutert. Es zeigen:

Figur 1    den schematischen Aufbau und den Strahlengang bei einer Vorrichtung, die telezentrische Beleuchtungslichtbündel und Abbildungslichtbündel erzeugt, wobei das Referenzobjekt eine Gerade ist;

Figur 2    den schematischen Aufbau eines zweiten Ausführungsbeispieles einer Vorrichtung in leicht perspektivischer Betrachtung, wobei als Referenzobjekt eine kreisförmige Linie vorgesehen ist und zentrische Beleuchtungs- und Abbildungslichtbündel verwendet werden;

Figur 3 a      das Beispiel nach Fig. 2 mit einem schematischen Schnitt durch die Vorrichtung und das
zu vermessende Objekt in Abtastrichtung;

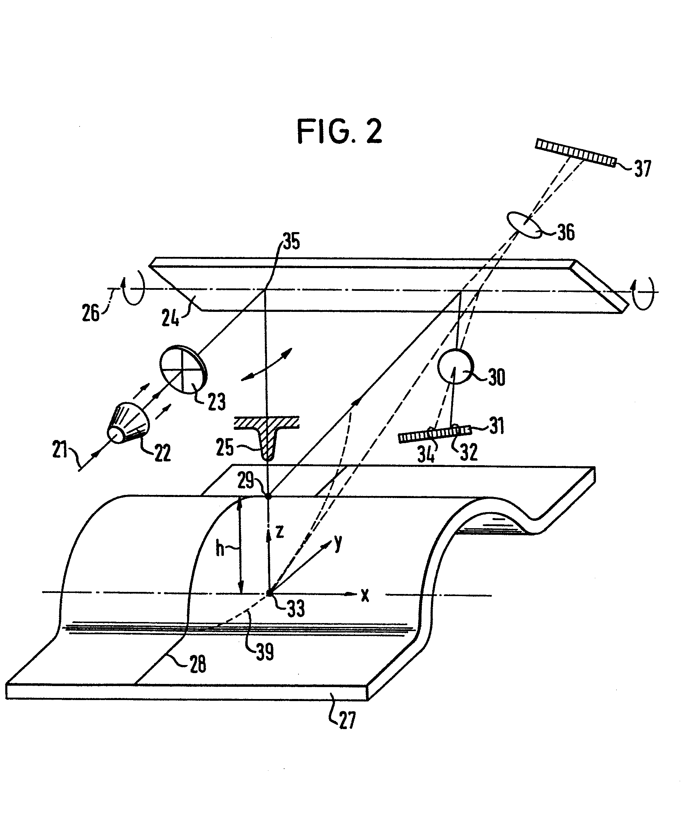

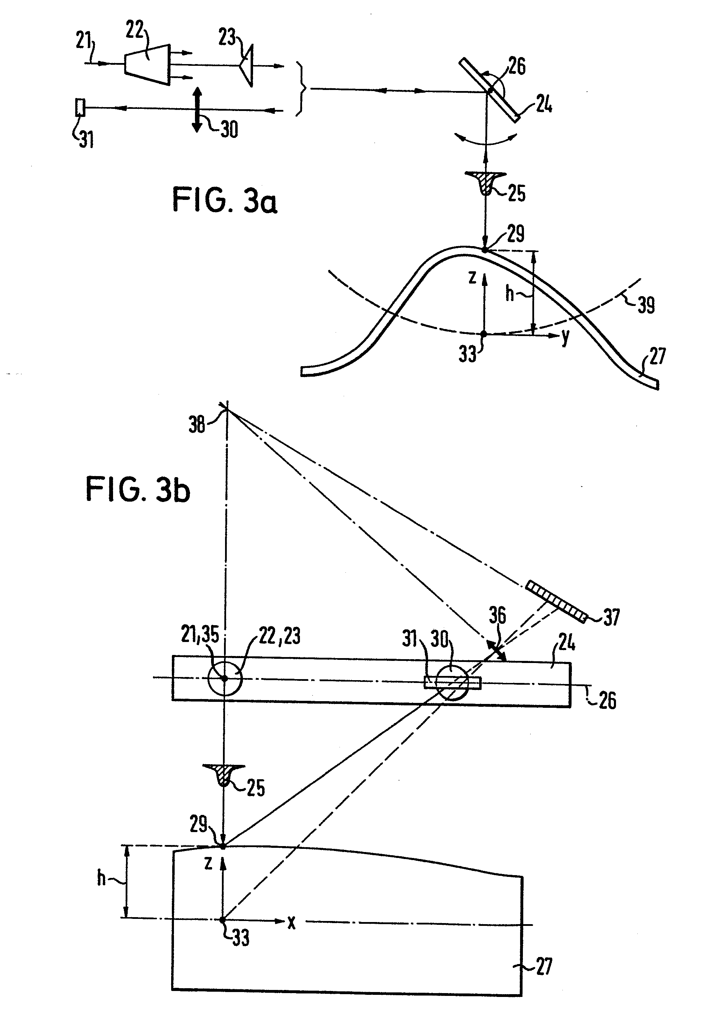

Figur 3 b      eine teilweise projektionsartige Betrachtung
des Beispieles nach der Fig. 2 in der xz-Ebene
und

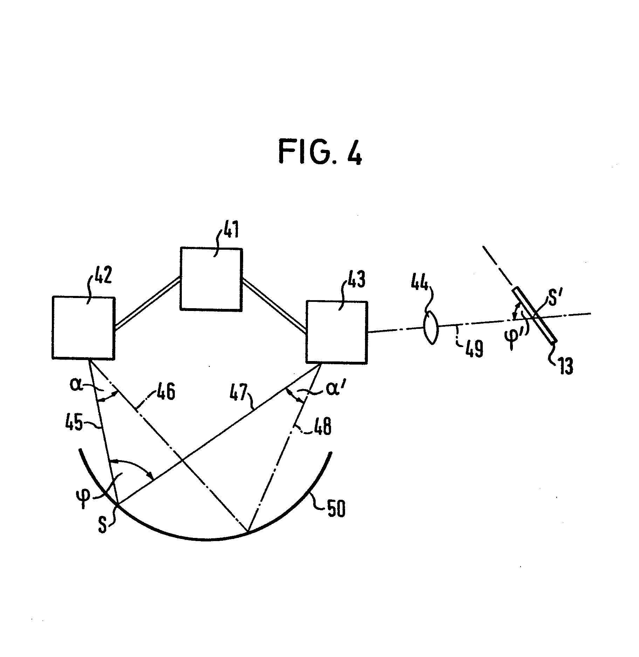

Figur 4      eine Prinzipskizze zur Erläuterung der Winkelrelation bei winkelstarrer Ablenkung und der
Neigungsanordnung der Empfängerlinie gegenüber der optischen Achse.

Im Beispiel nach der Fig. 1 wird zur Erzeugung des Beleuchtungslichtbündels ein Laserstrahl verwendet, der durch
eine Linse 1, eine im Strahlengang nachgeordnete Blende 2
und eine weitere Linse 3 aufgeweitet wird. Im weiteren
Strahlengang befindet sich nach einem festen Umlenkspiegel
4 ein zur Schärfentiefenerweiterung benutztes Axicon 5. Das
Beleuchtungslichtbündel wird nach dem Axicon 5 durch eine Linse 6 geführt,
die im Abstand ihrer Brennweite $f_6$ vor der ablenkenden Fläche
eines Spiegelrades 7, die die erste Ablenkungseinrichtung
bildet, angeordnet ist. Der weitere Strahlengang des Be
leuchtungslichtbündels erfolgt über einen weiteren festen Umlenkspiegel 8 und eine Linse 9. Die Linse 9 weist eine
Brennweite $f_9$ auf. Die Anordnung ist dabei so getroffen,
daß der Abstand der Fläche des Spiegelrades 7 über den festen
Umlenkspiegel 8 zur Linse 9 gleich dem Abstand der Linse 9
von dem als Gerade dargestellten Referenzobjekt 10 ist. Das
heißt, der optische Weg eines Beleuchtungslichtbündels
zwischen der Fläche des Spiegelrades 7 und der Linse 9
sowie zwischen der Linse 9 und dem Referenzobjekt 10 ist jeweils gleich der Brennweite $f_9$. Zur Abbildung bzw.
Beobachtung der Intensitätsverteilung bzw. der Beleuchtungsflecke
auf dem zu vermessenden Objekt, wird das Abbildungslichtbündel über die Linse 9, einen feststehenden Umlenkspiegel 11, eine
weitere Fläche des Spiegelrades 7, die die zweite Ablenkungseinrichtung bildet, und eine Linse 12 geführt. Die Linse 12 bildet in diesem
Beispiel die Abbildungseinrichtung nach der Ablenkung. Im
Empfangsbereich nach der Linse 12 ist eine Empfängereinrichtung 13 angeordnet, in der der Beleuchtungsfleck abgebildet wird. Die optische Weglänge zwischen der Linse 9 und
dem Referenzobjekt 10 sowie zwischen der Linse 9, dem Umlenkspiegel 11 und der kompensierenden Fläche des Spiegelrades 7 im Abbildungsstrahlengang entsprechen jeweils der
Brennweite $f_9$. Die optischen Weglängen von der Fläche des
Spiegelrades 7 zur Linse 12 und von dieser zum Schnittpunkt
der optischen Achse des Abbildungsstrahlenganges mit der
als Detektor ausgelegten Empfängereinrichtung 13
sind     jeweils gleich der Brennweite $f_{12}$ der Linse 12.
Die Pupille des Beleuchtungs- bzw. des Abbildungslichtbündels liegt in der ablenkenden bzw. kompensierenden
Fläche des Spiegelrades 7. Durch Drehen des Spiegelrades 7
wird eine Konturlinie des Objektes punktweise abgetastet.
Der in Fig. 1 ausgezogene Strahlengang ergibt sich für
die eingezeichnete Stellung des Spiegelrades 7. Der mit
unterbrochener Linie eingezeichnete Strahlengang ergibt
sich demgegenüber nach einer Drehung des Spiegelrades um
10°. Die von der Empfängereinrichtung 13 gelieferte Höheninformation wird digital einer Winkelstellung des Spiegelrades 7 und damit einem Abtastort bzw. der Lage eines Beleuchtungsfleckes auf dem zu vermessenden Objekt zugeordnet.
Der Antrieb des Spiegelrades 7 kann z.B. mit einem Schrittmotor oder kontinuierlich mit Frequenzstabilisierung erfolgen. Im letzteren Fall werden mit außerhalb des Objekt-
bzw. Meßraumes liegenden Apparaturen Synchronisationsimpulse erzeugt. Zur Vermessung der dreidimensionalen Form,
also z (x,y), wird das Objekt zusätzlich senkrecht zur Abtastrichtung, die im Beispiel nach Fig. 1 die x-Achse ist,
verschoben, wobei dies zweckmäßigerweise auf einem Transportwagen erfolgen kann.

Durch die spezielle Anordnungslage der dem Beleuchtungs-
und Abbildungsstrahlengang gemeinsamen Linse 9 und ihrer
jeweiligen Pupille wird erreicht, daß sowohl alle Beleuchtungslichtbündel wie auch alle optischen Achsen der
Abbildungseinrichtung im Objektraum parallel, also telezentrisch sind und sich unter dem gleichen festen Winkel
schneiden. Hierdurch wird eine ortsunabhängige Genauigkeit der Formvermessung erreicht. Unter Objektraum wird
hierbei der Raum unterhalb der Linse 9 einschließlich des
zu vermessenden Objektes verstanden.

Das im Beispiel verwendete Axicon 5 ist eine Kegellinse. Der
Scheitelwinkel $\gamma$ des zur Schärfentiefenerweiterung benutzten
Axicons 5 im Strahlengang des Beleuchtungslichtbündels ist
so zu wählen, daß der auf dem Objekt erzeugte Beleuchtungsfleck bzw. dessen Ringstruktur den gewünschten Durchmesser
d des zentralen Maximums und die gewünschte Gesamtausdehnung
längs der Achse des Beleuchtungslichtbündels besitzt.
Hierbei gilt

$$d = \frac{1,2 \, \lambda}{\pi \, (n-1) \, \gamma}$$

wobei $\lambda$ die Wellenlänge des verwendeten Lichtes und n die
Brechzahl des Axiconmaterials ist. Zur Erzielung eines
großen Schärfentiefenbereichs in Beleuchtungsrichtung wird

- 21 -

der Abstand von Axicon 5 zur Linse 6 so gewählt, daß
das Axicon durch die Linsen 6 und 9 in den Objektraum
oberhalb der größten zu erwartenden Objekthöhe abgebildet wird.

Zur Erzielung einer scharfen Abbildung der das Objekt abtastenden Beleuchtungsflecke über das Abbildungslichtbündel auf die Empfängereinrichtung 13, wird die Empfängereinrichtung 13 gemäß der Scheimpflug-Bedingung gegen die
optische Achse der Abbildungseinrichtung geneigt.

Ein weiteres Ausführungsbeispiel ist in den Figuren 2,3a und
3b gezeigt. Das von einem nicht dargestellten Laser ausgehende Beleuchtungslichtbündel 21 wird durch einen Kollimator 22 aufgeweitet. Dieses aufgeweitete Lichtbündel
geht dann durch ein Axicon 23, das entlang der optischen
Achse eine enge Lichtverteilung 25 mit hellem Kern erzeugt.
Es wird hierdurch ein stark ausgeprägtes Intensitätsmaximum der Lichtverteilung erreicht. Das im Beispiel nach
Fig. 2 vorgesehene zu vermessende Objekt 27 wird mit
Hilfe eines Drehspiegels 24 sozusagen punktmäßig abgetastet. Die Drehachse 26 des Drehspiegels 24 liegt dabei
in der Spiegelebene. Das abtastende Beleuchtungslichtstrahlenbündel erzeugt sequentiell eine Konturlinie 28
auf dem Objekt 27. In der gezeigten Spiegelstellung liegt
der Beleuchtungsfleck gerade in der Position 29. Nach
der Reflektion dieses Beleuchtungsfleckes am Drehspiegel
24, wird der Beleuchtungsfleck durch eine Linse 30 auf
eine detektierende Linie von Empfängerelementen 31 in der
Position 32 abgebildet. Die Abbildung des Punktes 33,
der zufällig als Nullpunkt des xyz-Koordinatensystems
angenommen ist, erfolgt im Ausführungsbeispiel nach der
Fig. 2 in der Position 34 der Empfängereinrichtung 31.

Die Differenz zwischen der Position 32 und 34 in der
Empfängereinrichtung 31 zeigt dabei die Höhe h der
Kontur des zu vermessenden Objektes an der Position 29 an.

Im Beispiel nach Fig. 2 und der dort gezeigten Geometrie
der Beleuchtungseinrichtung ist das Referenzobjekt 39
ein Kreisbogen um den Punkt 35, wobei der Radius gleich
der Entfernung zwischen den Punkten 35 und 33 ist. Von
der Vorrichtung werden daher Höhendifferenzen zum Referenzobjekt bzw. im Beispiel zum Kreisbogen angezeigt.

Die Abbildung des Beleuchtungsfleckes in der Position 29
geschieht mit erweiterter Schärfentiefe vorzugsweise dadurch, daß eine passende Neigung der Empfängereinrichtung
zur optischen Achse gewählt wird, wobei die gewählte
Neigung der Scheimpflugbedingung entspricht. Diese Scheimpflugbedingung sei durch den entfalteten Strahlengang 36,
37,38 unter bezug auf die Figuren 2 und 3 b erläutert.
Das virtuelle Linsenbild 36 ist das Spiegelbild der Linse
30. Das Spiegelbild der Empfängereinrichtung 31 bzw. der
Empfängerzeile ist in Position 37 dargestellt. Orientiert
man die z-Ebene, die Hauptebene der Linse 36 und die
Empfängereinrichtung 37 so, daß sich ihre Verlängerungen
in der Position 38 schneiden, so erhält man eine scharfe
Abbildung auf der Linie der Empfängerelemente unabhängig
von der z-Koordinate des Beleuchtungsfleckes.

Die erweiterte Schärfentiefe kann alternativ durch eine
die Schärfentiefe erweiternde Abbildung erfolgen, wozu
z.B. eine Ringpupille vor der Linse 30 angeordnet werden
kann.

Zur Abtastung des zu vermessenden Objektes in x-Richtung
wird das Objekt vorzugsweise auf einem Transportwagen
mechanisch bewegt.

Die beiden Ausführungsbeispiele gemäß der Fig. 1 bzw.
gemäß den Figuren 2,3a und 3b unterscheiden sich bezüglich der Art, wie die Kompensation des Abtast- oder
Verschiebeweges realisiert wird und in der Form des "Referenzobjektes". Im ersten Ausführungsbeispiel nach Fig. 1
läßt sich durch Weglassen der Linse 6 und der Linse 9
sowie durch entsprechende Änderung der Brennweite $f_{12}$
der Linse 12 ebenfalls ein annähernd kreisförmiges
"Referenzobjekt" erreichen. Desgleichen lassen sich beim
zweiten Ausführungsbeispiel nach den Figuren 2,3a und 3b
durch Hinzufügen zweier Linsen im Beleuchtungsstrahlengang und einer weiteren Linse im Abbildungsstrahlengang
analog zur Anordnung in Fig.1 telezentrische Beleuchtungs-
und Abbildungslichtbündel erzielen.
In Fig. 4 ist in einer Prinzipskizze die Neigung der
Empfängereinrichtung 13 mit einem Winkel $\varphi'$ zur optischen
Achse 49 einer Abbildungseinrichtung 43,44 dargestellt.
Die Abbildungseinrichtung besteht im Beispiel nach Fig.4
aus einer Ablenkungseinrichtung 43 mit einem Abbildungselement 44. Des weiteren enthält diese Skizze beispielhaft
die Relationen für eine winkelstarre Kopplung einer ersten
Ablenkungseinrichtung 42 mit der zweiten Ablenkungseinrichtung
43 über eine Kopplungseinrichtung 41. Das Referenzobjekt 50
ist im Beispiel der Fig. 4 ein Kreisbogen. Ein erstes
Beleuchtungslichtbündel 45 ist ab der Ablenkungseinrichtung 42 eingezeichnet und ist nach einer Winkelablenkung
um den Winkel $\alpha$ mit unterbrochener Linie als Beleuchtungslichtbündel 46 dargestellt.

Im Abbildungsbereich ist die Abbildungseinrichtung 43,44 mit der optischen Achse 4 7 gezeigt. Nach Ablenkung der optischen Achse durch die Ablenkungseinrichtung 43 bei winkelstarrer Kopplung zur Ablenkung des Beleuchtungslichtbündels durch die Ablenkungseinrichtung 42, verläuft die optische Achse in der strichpunktierten Linie 48, so daß die optische Achse der Abbildungseinrichtung 43,44 im Objektbereich eine Winkeldrehung um $\alpha'$ erfahren hat. Bei einer winkelstarren Kopplung durch die Kopplungseinrichtung 41 bedeutet dies, daß der Winkel $\alpha'$ gleich dem Winkel $\alpha$ wird, wobei die optische Achse 49 nach der Ablenkungseinrichtung 43 festliegt.

Im Hinblick auf die Schärfentiefenerweiterung im Abbildungsbereich wird die Empfängereinrichtung 13 in einem Schnittpunkt S' mit der optischen Achse 49 angeordnet, wobei dieser Schnittpunkt S' die Abbildung des Schnittpunktes S bzw. des Durchstoßpunktes eines Beleuchtungslichtbündels 45 mit der Oberfläche des Referenzobjektes 50 ist. Der Neigungswinkel $\varphi'$ der Empfängereinrichtung 13 gegenüber der optischen Achse 49 errechnet sich unter Berücksichtigung des Abbildungsmaßstabes ß der Abbildungseinrichtung 43,44 nach der Ablenkung derart, daß ß • tan $\varphi'$ gleich dem Tangens des Winkel $\varphi$ ist, der zwischen einem Beleuchtungslichtbündel 45 und der optischen Achse 47 der Abbildungseinrichtung 43,44 im Objektbereich gebildet wird.

Die Erfindung schafft daher ein optisches Verfahren und eine entsprechende Vorrichtung zur Ermittlung der dreidimensionalen Form von Objekten mit hoher räumlicher Auflösung und

- 25 -

gleichzeitig großem Meßvolumen. Bei derartigen Verfahren
und Vorrichtungen ist eine Beleuchtung des Objektes mit
sehr kleinen Beleuchtungsflecken, einer schmalen Lichtlinie oder einer feinstrukturierten Intensitätsverteilung
nötig. Die Dimensionen der verwendeten Lichtbündel sollen
im ganzen Meßvolumen relativ klein sein, wobei außerdem
die Position des Beleuchtungsfleckes auf dem Objekt mittels
einer Abbildung in eine positionsempfindliche Empfängereinrichtung mit großer Genauigkeit bestimmt werden soll.
Das verwendete Abbildungslichtbündel resultiert im Prinzip
aus dem Streulicht des jeweiligen Beleuchtungsfleckes auf
dem Objekt.

Das Verfahren und die Vorrichtung gemäß der Erfindung werden daher vorteilhafterweise so ausgelegt, daß die durch
die Abtastung des Objektes entstehende seitliche Verschiebung der abtastenden Intensitätsverteilung auf dem
Objekt gegenüber dem positionsempfindlichen Empfänger
kompensiert wird, daß weiterhin die Erzeugung der abtastenden Intensitätsverteilung mit gegenüber der konventionellen
Abbildung erweiterter Schärfentiefe erfolgt, und daß die
Abbildung der am Objekt gestreuten Intensitätsverteilung
auf den positionsempfindlichen Empfänger mit gegenüber der
konventionellen Abbildung erweiterter Schärfentiefe erfolgt.
In einer anderen Ausführung wird das Verfahren und die Vorrichtung vorteilhafterweise so konzipiert, daß die abtastende Intensitätsverteilung rasch
über das Objekt bewegt wird, daß die Beobachtung der entstehenden Konturlinie auf einem zweidimensional-positionsempfindlichen Empfänger erfolgt, daß die Erzeugung der abtastenden Intensitätsverteilung mit gegenüber der konventionellen Abbildung erweiterter Schärfentiefe erfolgt
und daß die Abbildung der am Objekt gestreuten Intensitätsverteilung auf den positionsempfindlichen Empfänger mit
gegenüber der konventionellen Abbildung erweiterter
Schärfentiefe erfolgt.

Alternativ können das Verfahren und die Vorrichtung geeigneterweise
so ausgelegt, daß die durch die Abtastung des Objektes
entstehende seitliche Verschiebung der abtastenden Intensitätsverteilung auf dem Objekt gegenüber dem positionsempfindlichen Empfänger kompensiert wird und daß die Abbildung der am Objekt gestreuten Intensitätsverteilung
auf eine gemäß der Scheimpflugbedingung so angeordneten
positionsempfindlichen Empfänger erfolgt, daß scharfe Abbildung im ganzen Meßbereich erreicht wird.

Das grundlegende Prinzip der Erfindung ist darin zu sehen,
daß die durch die Abtastung des Objektes entstehende seitliche Verschiebung der abtastenden Intensitätsverteilung
auf dem Objekt gegenüber dem positionsempfindlichen Empfänger
kompensiert wird.

Vorteilhafterweise wird dies so gelöst, daß die Kompensation
der Abtastbewegung durch Führen des Beleuchtungs- und Abbildungsstrahlenganges über zwei synchron ablenkende
Lichtablenker bzw. Ablenkungseinrichtungen erfolgt.

Geeigneterweise erfolgt dies so, daß die Kompensation der
Abtastbewegung durch Führung des Beleuchtungs- und Abbildungsstrahlengangs über einen gemeinsamen Lichtablenker erfolgt.

Hierzu wird vorteilhafterweise ein einziger drehbarer
Spiegel als Lichtablenker verwendet.

In anderer Ausführungsform können geeigneterweise zwei
starr verbundene Spiegel als Lichtablenker verwendet
werden.

In einer vorteilhaften Weiterbildung der Erfindung werden
als Lichtablenker zwei verschiedene Flächen eines Spiegelrades verwendet.

Geeigneterweise können als Lichtablenker auch die Vorder-
und Rückseite eines beidseitigen Spiegels verwendet werden.

Verfahren und Vorrichtung werden dadurch weitergebildet,
daß zur Schärfentiefenerweiterung im Beleuchtungsstrahlengang ein Axicon verwendet wird.

Ebenso kann vorteilhafterweise die Schärfentiefenerweiterung im Beleuchtungsstrahlengang mittels einer
Ringpupille erreicht werden.

Als weitere vorteilhafte Weiterbildung kann die Schärfentiefenerweiterung im Beleuchtungsstrahlengang auch durch
schnelles Verschieben des abtastenden Lichtpunktes bzw. des Fokus des
Lichtbündels entlang der optischen Achse des Beleuchtungsstrahlenganges erreicht werden.

Das Verfahren und die Vorrichtung können auch so weitergebildet werden, daß die Schärfentiefenerweiterung im
Beleuchtungsstrahlengang durch Verwendung einer Intensitätsverteilung auf dem Objekt erzeugt wird, die sich bei
Defokussierung selbst reproduziert.

Hierzu wird geeigneterweise ein Fresnel-Zonenmuster verwendet. Als weitere vorteilhafte Alternative bietet sich hierfür die Verwendung eines Gitters an.

Die Schärfentiefenerweiterung im Abbildungsstrahlengang
wird vorteilhafterweise mit gleichen Methoden wie im Beleuchtungsstrahlengang bewirkt, d.h. daß ein Axicon,
eine Ringpupille oder das schnelle Verschieben der Schärfenebene entlang der optischen Achse verwendet wird.

Gemäß einer weiteren Ausgestaltung der Erfindung wird die Empfängereinrichtung gegenüber der optischen Achse des Abbildungsstrahlenganges gemäß der Scheimpflugbedingung so geneigt angeordnet, daß eine scharfe Abbildung der abtastenden Intensitätsverteilung im ganzen Meßbereich erreicht wird.

Zur genaueren räumlichen Lagebestimmung eines Beleuchtungsfleckes auf dem zu vermessenden Objekt ist es vorteilhaft, den Schwerpunkt des Bildes der abtastenden Intensitätsverteilung zu ermitteln.

Vorteilhafterweise wird als positionsempfindliche Empfängereinrichtung eine eindimensionale Anordnung photoempfindlicher Elemente verwendet.

Vorteilhafterweise wird die optische Achse des Abbildungsstrahlenganges in die durch die Beleuchtungslichtbündel aufgespannte Ebene gelegt.

Bei einer anderen vorteilhaften Ausgestaltung wird die optische Achse des Abbildungsstrahlenganges senkrecht zur Abtast- bzw. Verschieberichtung angeordnet.

Eine weitere besonders vorteilhafte Wirkung ergibt sich dadurch, daß durch Anordnung eines fokussierenden Elementes im Beleuchtungs- und Abbildungsstrahlengang zwischen der Ablenkungseinrichtung und dem Objekt- bzw. Meßraum, im Objektraum telezentrische Beleuchtungs- und Abbildungslichtbündel erzielt werden.

Durch Anordnung eines fokussierenden Elementes im Strahlengang der Beleuchtungslichtbündel zwischen der Ablenkungseinrichtung und dem Objektraum können vorteilhafterweise telezentrische Beleuchtungslichtbündel erreicht werden.

Alternativ zur ausschließlichen Kompensation der Abtastrichtung kann geeigneterweise auch unter Umgehung der Kompensation zusätzlich eine direkte Beobachtung des am

- 29 -

Objekt gestreuten Lichtes erfolgen und dadurch das Verfahren
als Lichtschnittverfahren mit erweiterter Schärfentiefe
benutzt werden.

Ingesamt gesehen wird daher die Möglichkeit geschaffen,
dreidimensionale Objekte mit großer räumlicher Auflösung
bei gleichzeitig großem Meßbereich in allen drei Dimensionen
schnell zu vermessen, ohne durch die begrenzte Schärfentiefe
und die Zahl der Auflösungselemente bekannter, erhältlicher
Empfängereinrichtungen stark eingeschränkt zu sein.

# Weber, Hellfeld & Tönnies
PATENTANWÄLTE

D-8000 MÜNCHEN 71
Hofbrunnstrasse 47

Telefon:     (0 89) 79 15050
Telex:          5 - 21 28 77
Telefax:     (0 89) 79 15256

– 1 –

Patentansprüche

1.  Verfahren zur mehrdimensionalen Vermessung eines Objektes,
bei dem das Objekt mit einem Beleuchtungslichtbündel
beleuchtet wird,
bei dem durch Ablenken des Beleuchtungslichtbündels in
vorgebbare Beleuchtungsrichtungen eine Folge von Beleuchtungsflecken auf dem Objekt erzeugt wird,
bei dem die Beleuchtungsflecke nacheinander durch Abbildungslichtbündel in von den Beleuchtungsrichtungen
verschiedenen Abbildungsrichtungen in einen Empfangsbereich abgebildet werden und
bei dem die Position der Abbildungen der Beleuchtungsflecke im Empfangsbereich bestimmt und daraus sowie aus
der Beleuchtungsrichtung die räumliche Lage der Beleuchtungsflecke auf dem zu vermessenden Objekt ermittelt wird,
dadurch  g e k e n n z e i c h n e t ,
daß das Beleuchtungslichtbündel und das für die Abbildung
eines Beleuchtungsfleckes verwendete Abbildungslichtbündel abgelenkt werden,
daß die Ablenkung des Beleuchtungslichtbündels und des
Abbildungslichtbündels so gekoppelt erfolgt, daß alle
Beleuchtungsflecke auf einem vorgebbaren Referenzobjekt
unter einem bestimmten Referenzwinkel zur optischen Achse
der Abbildungseinrichtung in eine Empfangslinie im Empfangsbereich abgebildet werden, und daß jeder Beleuchtungsfleck auf dem Objekt unter einem beliebigen Winkel zur
optischen Achse der Abbildungseinrichtung in die Empfangslinie abgebildet wird, der mit dem Referenzwinkel
in einer Empfangsebene liegt, wobei die Empfangslinie von der optischen Achse der Abbildungseinrichtung im Empfangsbereich geschnitten wird
und die Empfangsebene von den Achsen der Abbildungslichtbündel im Empfangsbereich nach der Ablenkung aufgespannt
wird, daß in der Empfangsebene aus dem Winkelabstand zwischen dem
jeweiligen Winkel der Achse des jeweiligen Abbildungslichtbündels und dem Referenzwinkel die Abweichung der Koordinaten des zu vermessenden Objektes vom Referenzobjekt
in Richtung der Achse des jeweiligen Beleuchtungslichtbündels bestimmt wird, und daß aus den Koordinaten des Referenzobjektes und der Abweichung der Koordinaten des Objektes vom Referenzobjekt
die räumliche Lage der Beleuchtungsflecke auf dem zu vermessenden Objekt als Form des Objektes bestimmt wird.


2. Verfahren nach Anspruch 1, dadurch g e k e n n z e i c h n e t ,
daß die Empfangslinie so vorgesehen wird, daß die optische Achse der Abbildungseinrichtung im Empfangsbereich
in einem Punkt S' geschnitten wird, in den ein Schnittpunkt
S der Achse des jeweiligen Beleuchtungslichtbündels mit der
optischen Achse der Abbildungseinrichtung vor der Ablenkung
der Abbildungslichtbündel, abgebildet wird, und daß die Empfangslinie so gegen die optische Achse der Abbildungseinrichtung nach der Ablenkung geneigt ist, daß
der Tangens des Neigungswinkels $\varphi'$ (tan $\varphi'$) multipliziert
mit dem Abbildungsmaßstab ß der Abbildungseinrichtung
gleich dem Tangens des Winkels $\varphi$ ist, unter dem sich das
jeweilige Beleuchtungslichtbündel und die optische Achse der Abbildungseinrichtung im Objektbereich vor der Ablenkung schneiden, d.h.
daß ß · tan $\varphi'$ = tan $\varphi$ ist.

3. Verfahren nach Anspruch 1 oder 2, dadurch g e k e n n -
z e i c h n e t , daß die Beleuchtungslichtbündel und die
zugeordneten Abbildungslichtbündel winkelstarr gekoppelt
so abgelenkt werden, daß der Winkel zwischen den Achsen
zweier beliebiger Beleuchtungslichtbündel und der Winkel
zwischen den jeweiligen zugeordneten optischen Achsen der
Abbildungseinrichtung im Objektbereich vor der Ablenkung
der Abbildungslichtbündel, gleich ist.

4. Verfahren nach einem der Ansprüche 1 bis 3, dadurch
g e k e n n z e i c h n e t ,
daß zur Erzeugung einer Folge von Beleuchtungsflecken
auf dem zu vermessenden Objekt und zur Abbildung dieser
Folge von Beleuchtungsflecken in den Empfangsbereich
telezentrische Beleuchtungslichtbündel und Abbildungslichtbündel verwendet werden.

5. Verfahren nach einem der Ansprüche 1 bis 4, dadurch
g e k e n n z e i c h n e t ,
daß ein Beleuchtungslichtbündel mit einem ausgeprägten
Intensitätsmaximum seiner Lichtverteilung längs seiner
Lichtbündelachse verwendet wird.

6. Verfahren nach einem der Ansprüche 1 bis 5, dadurch
g e k e n n z e i c h n e t ,
daß ein Abbildungslichtbündel mit einem ausgeprägten
Intensitätsmaximum seiner Lichtverteilung längs seiner
Lichtbündelachse verwendet wird.

7. Vorrichtung zur mehrdimensionalen Vermessung eines Objektes, insbesondere zur Durchführung des Verfahrens nach einem der Ansprüche 1 bis 6, mit einer Beleuchtungseinrichtung zur Erzeugung eines Beleuchtungslichtbündels, mit einer ersten Ablenkungseinrichtung mindestens für das Beleuchtungslichtbündel zum Ablenken des Beleuchtungslichtbündels in vorgebbare Beleuchtungsrichtungen und zum Erzeugen einer Folge von Beleuchtungsflecken auf dem zu vermessenden Objekt, mit einer Abbildungseinrichtung zur Abbildung der einzelnen Beleuchtungsflecke mit einem Abbildungslichtbündel auf eine Empfängereinrichtung und mit einer mindestens mit der ersten Ablenkungseinrichtung und der Empfängereinrichtung verbundenen Auswerteeinrichtung, dadurch g e k e n n z e i c h n e t , daß eine zweite Ablenkungseinrichtung ( 7;26;43) für das Abbildungslichtbündel vorgesehen ist, die mit der ersten Ablenkungseinrichtung (7;26;42 ) gekoppelt ist, daß die Empfängereinrichtung ( 13 ) der zweiten Ablenkungseinrichtung (7;26;43) im Strahlengang des Abbildungslichtbündels nachgeschaltet ist und Empfängerelemente längs einer Linie aufweist, wobei die Linie einen Schnittpunkt (S') mit der optischen Achse (49) der Abbildungseinrichtung (43,44) hat und in einer Ebene liegt, die nach der zweiten Ablenkungseinrichtung (7;26,43) von den Achsen der Abbildungslichtbündel von Beleuchtungsflecken aufgespannt ist, daß die Kopplung der ersten und zweiten Ablenkungseinrichtung (7;26,42,43) so ausgelegt ist, daß die Abbildung von Beleuchtungsflecken eines Referenzobjektes (10;39;50) auf die Linie der Empfängerelemente (31) unter einem bestimmten Referenzwinkel zur optischen Achse (49) der Abbildungseinrichtung (43,44) erfolgt und daß die Abbildung eines Beleuchtungsfleckes (29) auf dem
zu vermessenden Objekt (27) auf die Linie der Empfängerelemente (31) unter einem Winkel zur optischen Achse der
Abbildungseinrichtung erfolgt, wobei aus dem jeweiligen
Winkelabstand zum Referenzwinkel und der Richtung der
Achse des jeweiligen Beleuchtungslichtbündels in der Auswerteinrichtung der Koordinatenabstand des Beleuchtungsfleckes auf dem zu vermessenden Objekt in Richtung
der Achse des jeweiligen Beleuchtungslichtbündels gegenüber dem Referenzobjekt bestimmbar ist.

8. Vorrichtung nach Anspruch 7, dadurch g e k e n n z e i c h n e t ,
daß die Linie der Empfängerelemente (13;31) die optische
Achse (49) der Abbildungseinrichtung im Empfangsbereich
in einem Punkt (S') schneidet, der durch Abbildung eines
Schnittpunktes (S) der Achse des jeweiligen Beleuchtungslichtbündels (45) mit der jeweiligen optischen
Achse (47) der im Strahlengang vor der zweiten Ablenkungseinrichtung (43) vorgesehenen Abbildungseinrichtung (43,44)
entsteht, und
daß die Linie der Empfängerelemente (13;31) gegen die optische Achse (49) der der zweiten Ablenkungseinrichtung
(43) nachgeschalteten Abbildungseinrichtung so geneigt
ist, daß der Tagens des Neigungswinkels $\varphi'$ (tan $\varphi'$)
multipliziert mit dem Abbildungsmaßstab ß der Abbildungseinrichtung (43,44) gleich dem Tangens des Winkels $\varphi$ ist,
unter dem das jeweilige Beleuchtungslichtbündel (45) die jeweilige optische Ache (47) der Abbildungseinrichtung im Objektbereich schneidet, d.h. daß ß · tan $\varphi'$ = tan $\varphi$ ist.

9. Vorrichtung nach Anspruch 8, dadurch g e k e n n z e i c h n e t ,
daß die Linie der Empfängerelemente (13;31) geradlinig angeordnet ist.

10. Vorrichtung nach einem der Ansprüche 7 bis 9, dadurch
g e k e n n z e i c h n e t , daß die Kopplung der ersten und der
zweiten Ablenkungseinrichtung (7;26;42,43) miteinander
winkelstarr ausgebildet ist.

11. Vorrichtung nach Anspruch 10, dadurch g e k e n n z e i c h - n e t , daß die erste und zweite Ablenkungseinrichtung als ein Ablenkspiegel ( 7;26 ) mit gemeinsamer Dreh- achse ausgebildet sind.

12. Vorrichtung nach einem der Ansprüche 7 bis 11, dadurch g e k e n n z e i c h n e t , daß in den Strahlengang des Beleuchtungslichtbündels eine Einrichtung (5) zur Schärfentiefenerweiterung, insbesondere ein Axicon ( 5 ) , eine Ringpupille oder eine Verschiebeeinrichtung zum schnellen Verschieben des Fokus des Beleuchtungslichtbündels längs der optischen Achse, zwischengeschaltet ist,

13. Vorrichtung nach einem der Ansprüche 7 bis 12, dadurch g e k e n n z e i c h n e t , daß in den Strahlengang des Abbildungslichtbündels eine Einrichtung zur Schärfentiefenerweiterung, insbesondere ein Axicon , eine Ringpupille oder eine Verschiebeein- richtung zum schnellen Verschieben des Fokus des Abbildungslichtbündels längs der optischen Achse, zwischengeschaltet ist.

14. Vorrichtung nach einem der Ansprüche 7 bis 13, dadurch g e k e n n z e i c h n e t , daß zur Erzeugung tele- zentrischer Beleuchtungslichtbündel und telezentrischer Abbildungslichtbündel im Objektbereich, eine optische Einrichtung (1,2,3,4,5,6,7,8,9; 9,11,7,12) im Strahlengang zwischen den Ablenkungseinrichtungen (7) und dem zu vermessenden Objekt vorgesehen ist.

# FIG. 1

# FIG. 2

FIG. 3a

FIG. 3b

# FIG. 4